# FASCICULE DE BREVET EUROPEEN

(11) **EP 1 931 568 B1**
(45) Date de publication et mention de la délivrance du brevet: **04.04.2012**
(21) Numéro de dépôt: 06793965.2
(22) Date de dépôt: 05.10.2006
(51) Int. Cl.: B64D 27/18

(54) **STRUCTURE RIGIDE POUR MAT D'ACCROCHAGE DE MOTEUR D'AERONEF, ET MAT COMPORTANT UNE TELLE STRUCTURE**
STARRER RAHMEN FÜR FLUGZEUGTRIEBWERKAUFHÄNGUNGSSTRUKTUR UND TRIEBWERKAUFHÄNGUNGSSTRUKTUR MIT EINEM SOLCHEN RAHMEN
RIGID FRAMEWORK FOR AIRCRAFT ENGINE MOUNTING STRUCTURE AND ENGINE MOUNTING STRUCTURE COMPRISING SUCH FRAMEWORK

(30) Priorité: 07.10.2005 FR 0553055
(43) Date de publication de la demande: 18.06.2008
(73) Titulaire: AIRBUS OPERATIONS, 31060 Toulouse (FR)
(72) Inventeur: BERNARDI, Lionel, F-81500 Bannières (FR); HUGUET, Thierry, F-31490 Brax (FR)
(74) Mandataire: Ilgart, Jean-Christophe
(86) Numéro de dépôt international: PCT/EP2006/067069
(87) Numéro de publication internationale: WO 2007/042453

(56) Documents cités:
- EP-A- 0 429 100
- US-A- 6 131 850
- US-A1- 2005 082 423

## Description

### DOMAINE TECHNIQUE

La présente invention se rapporte de façon générale à un mât d'accrochage d'un moteur destiné à être interposé entre la voilure d'un aéronef et le moteur concerné, ainsi qu'à une structure rigide d'un tel mât, également appelée structure primaire.

L'invention peut être utilisée sur tout type d'aéronef équipé de turboréacteurs ou de turbopropulseurs.

Un tel mât d'accrochage, ou « EMS » (de l'anglais « Engine Mounting Structure »), permet de suspendre un turbomoteur au-dessous de la voilure de l'aéronef, ou bien de monter ce turbomoteur au-dessus de cette même voilure.

### ETAT DE LA TECHNIQUE ANTERIEURE

Sur les aéronefs existants, les turbomoteurs sont suspendus en dessous de la voilure par des dispositifs d'accrochage complexes, également appelés mâts d'accrochage. Dans le cas des turboréacteurs, les mâts d'accrochage habituellement employés présentent une structure rigide formant caisson, c'est-à-dire constituée par l'assemblage de panneaux latéraux et de longerons inférieur et supérieur raccordés entre eux par une pluralité de nervures transversales.

De façon connue, ces mâts sont notamment conçus pour permettre la transmission à la voilure des efforts statiques et dynamiques engendrés par les turbomoteurs, tels que le poids, la poussée, ou encore les différents efforts dynamiques.

La structure rigide formant caisson est habituellement pourvue d'une pluralité d'ouvertures d'accès pratiquées sur les panneaux latéraux du caisson, ces ouvertures également appelées trous d'homme ou trous de visite permettant l'accès à l'intérieur du caisson à un opérateur désirant y réaliser des opérations d'assemblage ou de maintenance. De façon classique et connue de l'homme du métier, ces ouvertures sont habituellement dimensionnées de manière à autoriser le passage d'un bras d'un opérateur.

Il est noté que la présence d'une ouverture d'accès sur un panneau latéral entraîne une pénalité en terme de masse, puisqu'elle doit obligatoirement être associée à un surdimensionnement du panneau latéral concerné afin de permettre à l'ensemble de la structure rigide de remplir sa fonction première qui est d'assurer le passage des efforts provenant du moteur. De ce fait, il a donc été recherché une conception permettant de limiter au maximum le nombre d'ouvertures d'accès à prévoir sur les panneaux latéraux, tout en permettant d'avoir un accès satisfaisant à l'intérieur de la structure rigide et de ses différents espaces inter-nervures, chacun de ces derniers étant délimité par deux nervures directement consécutives selon la direction longitudinale de la structure rigide.

Il a ainsi été proposé de disposer ces ouvertures d'accès de façon à ce qu'elles présentent le plan vertical et longitudinal médian de la structure rigide comme plan de symétrie. De plus, pour limiter les contraintes de masse associées à la présence des ouvertures d'accès, celles-ci sont généralement agencées de manière à permettre l'accès direct à seulement un seul espace inter-nervures sur deux d'entre eux directement consécutifs. Par conséquent, le second de ces deux espaces inter-nervures est uniquement accessible indirectement pour un opérateur désirant y réaliser des opérations d'assemblage ou de maintenance, par l'intermédiaire des ouvertures d'accès de l'espace adjacent et du passage intérieur défini par la nervure transversale séparant ces deux mêmes espaces.

Ainsi, il est clair qu'avec cette disposition, l'accessibilité aux espaces inter-nervures du caisson qui ne sont pas pourvus d'ouvertures d'accès est relativement délicate pour les opérateurs.

D'autre part, il est précisé qu'avec cette disposition, la résistance mécanique de l'ensemble de la structure rigide en forme de caisson est fortement fragilisée au niveau des portions intégrant deux ouvertures symétriques autorisant l'accès direct à un même espace inter-nervures, ce qui conduit inévitablement à effectuer un surdimensionnement additionnel des panneaux latéraux, très contraignant en terme de masse globale du caisson.

Un tel mat d'accrochage est connu de US613/850, qui montre toutes les caractéristiques du préambule de la revendication 1.

### EXPOSÉ DE L'INVENTION

L'invention a donc pour but de proposer une structure rigide pour mât d'accrochage de moteur d'aéronef remédiant aux inconvénients rencontrés dans les structures de l'art antérieur.

Plus précisément, le but de la présente invention est de présenter une structure rigide pour mât d'accrochage de moteur d'aéronef dont la disposition des ouvertures d'accès sur les panneaux latéraux permet d'obtenir simultanément une meilleure résistance mécanique globale de la structure rigide, une diminution du nombre d'ouvertures à prévoir sur les panneaux latéraux, ainsi qu'une plus grande facilité d'accès à l'ensemble du caisson, par rapport à ce qui était rencontré avec les réalisations de l'art antérieur.

Pour ce faire, l'invention a pour objet une structure rigide d'un mât d'accrochage de moteur d'aéronef, la structure rigide se présentant sous la forme d'un caisson fermé latéralement d'un côté par un premier panneau latéral de caisson, et de l'autre côté par un second panneau latéral de caisson, cette structure rigide comportant également des nervures transversales reliant les deux panneaux latéraux et étant espacées les unes des autres selon une direction longitudinale de la structure rigide, ainsi qu'une pluralité d'espaces inter-nervures chacun délimité par deux nervures transversales directement consécutives, les premier et second panneaux latéraux étant équipés d'ouvertures d'accès permettant l'accès à l'intérieur du caisson. Selon l'invention, pour chaque espace inter-nervures appartenant à un groupe comportant au moins trois espaces inter-nervures quelconques et directement consécutifs de la structure rigide, une unique ouverture d'accès est prévue sur les panneaux latéraux, ces ouvertures d'accès étant disposées en alternance sur le premier et sur le second panneau latéral de la structure rigide.

Ainsi, il est à comprendre que la structure selon l'invention est originale en ce sens qu'elle ne prévoit plus l'accessibilité directe à seulement un espace inter-nervures sur deux consécutifs, mais à la totalité des espaces du groupe considéré. Cela se traduit avantageusement par une plus grande facilité d'accès à l'ensemble du caisson, puisque chaque espace inter-nervures peut donc être directement accessible depuis une unique ouverture, pour un opérateur désirant réaliser des opérations de maintenance ou d'assemblage à l'intérieur du caisson.

En outre, la configuration proposée permet d'obtenir une meilleure résistance mécanique globale de la structure rigide, étant donné que la disposition en alternance des ouvertures, également dénommée « en quinconce », implique que chaque coupe transversale de la structure n'intègre jamais deux ouvertures d'accès latérales, comme cela était pourtant le cas dans les réalisations de l'art antérieur. Par voie de conséquence, il est obtenue une meilleure répartition des contraintes dans les panneaux latéraux, ce qui permet de limiter les surdimensionnements et donc d'effectuer des gains importants en terme de masse globale des panneaux latéraux.

Enfin, il est indiqué que la disposition en quinconce retenue permet, pour un nombre d'espaces inter-nervures identique, de diminuer d'une unité le nombre d'ouvertures d'accès à prévoir sur les panneaux latéraux par rapport à celui rencontré dans les réalisations de l'art antérieur. A titre d'exemple illustratif, pour trois espaces inter-nervures directement consécutifs, les structures de l'art antérieur intégraient deux ouvertures pour le premier espace, aucune ouverture pour le second, et deux autres ouvertures pour le troisième espace inter-nervures, pour un total de quatre ouvertures d'accès. En revanche, l'invention prévoit une unique ouverture pour chacun des trois espaces, pour donc un total de trois ouvertures d'accès.

Cette diminution du nombre d'ouvertures pour un tronçon donné de la structure rigide conduit également à un gain de masse, toujours en raison du constat fait que la présence d'une ouverture d'accès sur un panneaux latéral entraîne un surdimensionnement pénalisant en terme de masse.

De préférence, le groupe comportant au moins trois espaces inter-nervures quelconques et directement consécutifs est constitué d'au moins huit espaces inter-nervures, ce nombre pouvant bien entendu être supérieur. Par ailleurs, il est pourrait également être prévu que le groupe s'étende à l'ensemble des espaces inter-nervures de la structure rigide, sans sortir du cadre de la présente invention.

D'une façon plus générale, on peut prévoir que le groupe comportant au moins trois espaces inter-nervures quelconques et directement consécutifs intègre au moins 60% de la totalité des espaces inter-nervures formés dans la structure rigide.

Préférentiellement, chaque ouverture d'accès est de forme circulaire, et dispose d'un rayon supérieur à 200 mm, cette valeur étant tout à fait appropriée pour autoriser le passage d'un bras d'un opérateur.

Toujours de manière préférentielle, la structure rigide comporte également un longeron supérieur ainsi qu'un longeron inférieur, et moins l'un de ces deux derniers est pourvu d'au moins une ouverture d'accès permettant l'accès à l'intérieur du caisson.

Enfin, l'invention a également pour objet un mât d'accrochage de moteur d'aéronef comportant une structure rigide telle que celle qui vient d'être décrite.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble pour aéronef comportant un mât d'accrochage de moteur selon un mode de réalisation préféré de la présente invention ; et
- les figures 2 et 3 représentent des vues en perspective détaillées de la structure rigide du mât d'accrochage montrée sur la figure 1.

### EXPOSÉ DÉTAILLÉ DE MODES DE RÉALISATION PRÉFÉRÉS

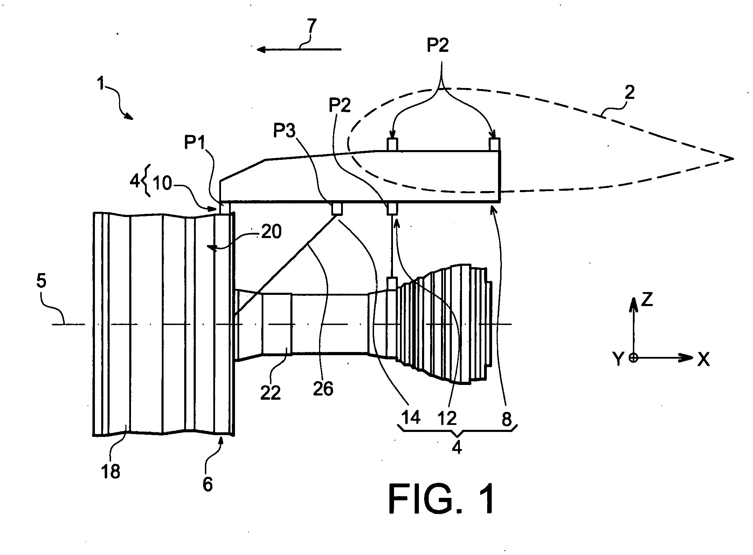

En référence à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un mât d'accrochage 4 selon un mode de réalisation préféré de la présente invention, ainsi qu'un moteur 6 tel qu'un turboréacteur accroché sous ce mât 4.

Globalement, le mât d'accrochage 4 comporte une structure rigide 8 ou structure primaire, des moyens d'accrochage du moteur 6 disposant d'une pluralité d'attaches moteur 10, 12, ainsi qu'un dispositif de reprise des efforts de poussée 14 générés par le moteur 6.

A titre indicatif, il est noté que l'ensemble 1 est destiné à être entouré d'une nacelle (non représentée), et que le mât d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du mât 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au mât 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du mât d'accrochage 4. Les autres éléments constitutifs non représentés de ce mât 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18. L'attache moteur avant 10, conçue de manière classique et connue de l'homme du métier, est fixée en un premier point P1 de la structure rigide 8.

D'autre part, l'attache moteur arrière 12, également réalisée de façon classique et connue de l'homme du métier, est quant à elle interposée entre la structure rigide 8 et le carter central 22, et fixée en un second point P2 de la structure rigide 8 placé en arrière par rapport au point P1.

Le dispositif de reprise des efforts de poussée 14 est quant à lui préférentiellement fixé en un troisième point P3 de la structure rigide 8, le point P3 étant situé entre les deux points P1 et P2. A ce titre, il est noté que les trois points précités appartiennent de préférence à un plan médian vertical et longitudinal du mât d'accrochage (non représenté).

Globalement, le dispositif de reprise 14 présente une conception classique et connue de l'homme du métier, à savoir qu'il présente deux bielles latérales de reprise des efforts de poussée 26 (une seule étant visible sur la figure 1), chacune de ces bielles comportant une extrémité avant raccordée au carter de soufflante 18, par exemple sur ou à proximité d'un plan médian horizontal du turbomoteur 6. D'autre part, leur extrémité arrière est raccordée de façon articulée à un palonnier (non représenté) rapporté sur la structure rigide 8.

Cette structure rigide 8 prend globalement la forme d'un caisson s'étendant de l'arrière vers l'avant, sensiblement selon la direction X.

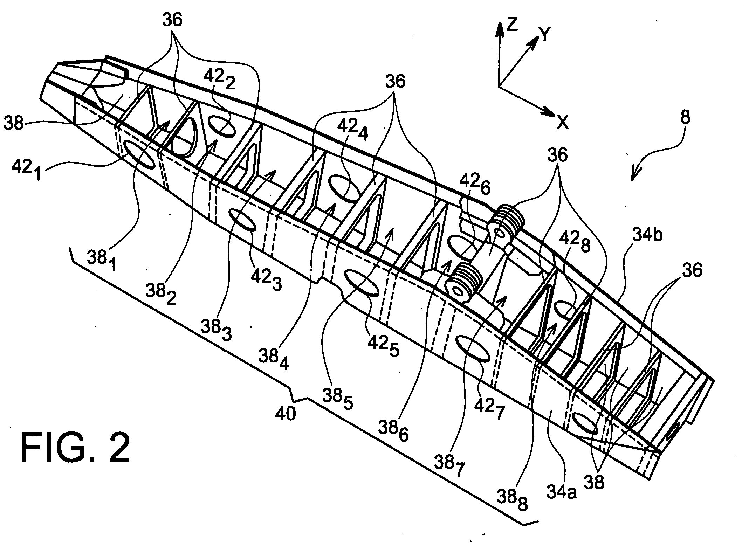

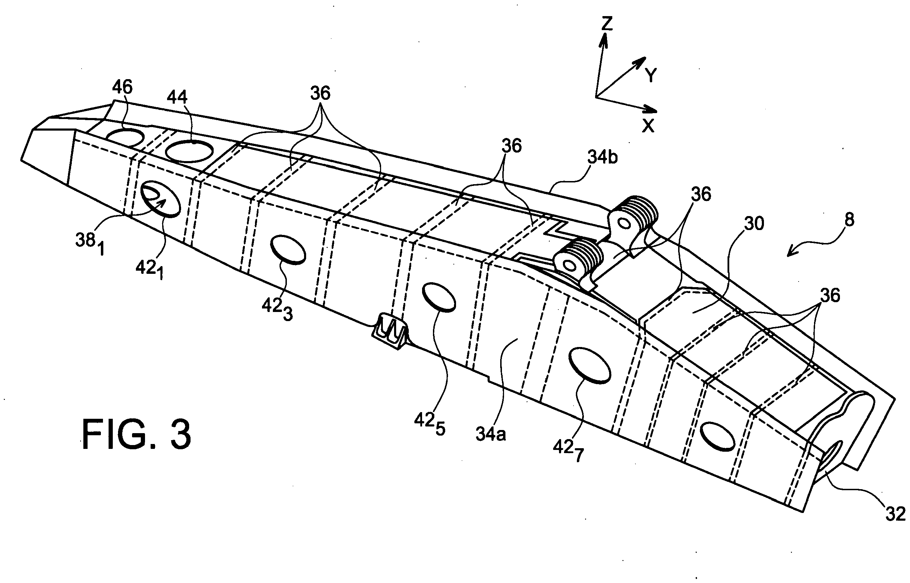

Plus précisément en référence aux figures 2 et 3 montrant de façon plus détaillée la structure rigide 8 objet de la présente invention, on peut apercevoir que celle-ci est réalisée par l'assemblage classique d'un longeron supérieur 30, d'un longeron inférieur 32, d'un premier panneau latéral de caisson 34a et d'un second panneau latéral de caisson 34b. Les quatre éléments précités s'étendent sensiblement d'un bout à l'autre de la structure 8 selon la direction X, et peuvent être réalisés d'un seul tenant ou obtenus par l'assemblage de plusieurs portions, sans sortir du cadre de l'invention.

Par ailleurs, le caisson 8 est équipé de nervures transversales 36 prenant chacune la forme d'un cadre et étant agencées selon des plans YZ, et espacées les unes des autres selon la direction X.

Ces nervures 60 permettent de définir des espaces inter-nervures 38 et 38₁ à 38₈ qui sont donc chacun délimités vers l'avant et vers l'arrière par deux nervures 36 directement consécutives, et également délimités par les longerons 30, 32 ainsi que par les deux panneaux latéraux 34a, 34b.

Ainsi, dans le mode de réalisation préféré décrit, parmi les douze espaces inter-nervures formés dans la structure rigide 8, huit d'entre eux directement consécutifs (référencées 38₁ à 38₈) forment un groupe 40 au sein duquel une unique ouverture d'accès est prévue sur les panneaux 34a, 34b pour chacun des espaces 38₁ à 38₈ concernés.

Par ailleurs, il est réalisé une alternance / une quinconce dans la disposition de ces ouvertures, étant donné qu'elles sont alternativement agencées sur le premier panneau 34a, et sur le second panneau 34b.

Plus précisément, comme on peut le voir le mieux sur la figure 2, l'ouverture d'accès 42₁ située la plus en avant sur le groupe 40 d'espaces inter-nervures, c'est-à-dire celle débouchant directement dans l'espace référencé 38₁, est pratiquée sur le premier panneau 34a. Ensuite, en allant vers l'arrière, l'ouverture d'accès 42₂ située au niveau de l'espace inter-nervures directement adjacent référencé 38₂ est quant à elle pratiquée sur le second panneau 34b. Toujours en allant vers l'arrière, l'ouverture d'accès 42₃ située au niveau de l'espace inter-nervures directement adjacent et référencé 38₃ est à nouveau pratiquée sur le premier panneau 34a. Ainsi, cette alternance / cette quinconce dans la disposition des ouvertures d'accès est pratiquée sur l'ensemble du groupe 40, ce qui implique que les ouvertures 42₄, 42₆, 42₈ débouchant directement et respectivement dans les espaces référencés 38₄, 38₅, 38₈ sont situées sur le second panneau latéral 34b, de même que les ouvertures 42₅ et 42₇ débouchant directement et respectivement dans les espaces référencés 38₅ et 38₇ sont réalisées sur le premier panneau latéral 34a.

D'une façon plus générale, on peut faire en sorte que ce groupe 40 sur lequel est réalisée cette alternance d'ouvertures uniques intègre de préférence au moins 60% de la totalité des espaces inter-nervures 38 et 38₁ à 38₈ formés dans la structure rigide 8, ce qui permet un accès facilité à une grande partie de la structure rigide 8.

Chaque ouverture d'accès 42₁ à 42₈ est de forme circulaire d'axe sensiblement parallèle à la direction Y, et dispose d'un rayon supérieur à 200 mm.

De plus, on peut également prévoir que l'un ou les deux longerons 30, 32 soit muni d'au moins une ouverture d'accès permettant l'accès à l'intérieur du caisson. Comme cela est montré à titre d'exemple sur la figure 3, il est alors possible de prévoir une ouverture d'accès 44 sur le longeron supérieur 30, au niveau de l'espace inter-nervures 38₁ le plus avant du groupe 40. Naturellement, ces ouvertures pourraient être pratiquées de manière à déboucher dans un espace inter-nervures 38 n'appartenant pas au groupe 40, comme cela est montré à titre d'exemple avec l'ouverture d'accès référencée 46 et débouchant dans un espace inter-nervures située à l'avant par rapport au groupe précité.

Bien entendu, diverses modifications peuvent être apportées par l'homme du métier au mât d'accrochage 4 et à sa structure rigide 8 qui viennent d'être décrits, uniquement à titre d'exemples non limitatifs.

## Revendications

1. Structure rigide (8) d'un mât d'accrochage (4) de moteur (6) d'aéronef, ladite structure rigide se présentant sous la forme d'un caisson fermé latéralement d'un côté par un premier panneau latéral de caisson (34a), et de l'autre côté par un second panneau latéral de caisson (34b), ladite structure rigide comportant également des nervures transversales (36) reliant les deux panneaux latéraux (34a, 34b) et étant espacées les unes des autres selon une direction longitudinale (X) de la structure rigide, ainsi qu'une pluralité d'espaces inter-nervures (38, 38₁ à 38₈) chacun délimité par deux nervures transversales (36) directement consécutives, lesdits premier et second panneaux latéraux (34a, 34b) étant équipés d'ouvertures d'accès (42₁ à 42₈) permettant l'accès à l'intérieur du caisson,
**caractérisée en ce que** pour chaque espace inter-nervures (38₁ à 38₈) appartenant à un groupe (40) comportant au moins trois espaces inter-nervures quelconques et directement consécutifs de la structure rigide, une unique ouverture d'accès (42₁ à 42₈) est prévue sur les panneaux latéraux (34a, 34b), ces ouvertures d'accès (42₁ à 42₈) étant disposées en alternance sur ledit premier et sur ledit second panneau latéral (34a, 34b) de la structure rigide.

2. Structure rigide (8) selon la revendication 1, **caractérisée en ce que** ledit groupe (40) comportant au moins trois espaces inter-nervures quelconques et directement consécutifs est constitué d'au moins huit espaces inter-nervures (38₁ à 38₈).

3. Structure rigide (8) selon la revendication 1 ou la revendication 2, **caractérisée en ce que** ledit groupe (40) comportant au moins trois espaces inter-nervures quelconques et directement consécutifs intègre au moins 60% de la totalité des espaces inter-nervures (38, 38₁ à 38₈) formés dans la structure rigide.

4. Structure rigide (8) selon l'une quelconque des revendications précédentes, **caractérisée en ce que** chaque ouverture d'accès (42₁ à 42₈) est de forme circulaire, et dispose d'un rayon supérieur à 200 mm.

5. Structure rigide (8) selon l'une quelconque des revendications précédentes, **caractérisée en ce qu'**elle comporte également un longeron supérieur (30) ainsi qu'un longeron inférieur (32), et **en ce qu'**au moins l'un de ces deux derniers est pourvu d'au moins une ouverture d'accès (44, 46) permettant l'accès à l'intérieur du caisson.

6. Mât d'accrochage (4) de moteur (6) d'aéronef comportant une structure rigide (8) selon l'une quelconque des revendications précédentes.

## Claims

1. Rigid structure (8) for a suspension pylon (4) for an aircraft engine (6), said rigid structure being in the form of a box laterally closed on one side by a first box side panel (34a), and on the other side by a second box side panel (34b), said rigid structure also comprising transverse ribs (36) connecting the two side panels (34a, 34b) and located at a spacing from each other along the longitudinal direction (X) of the rigid structure, and a plurality of inter-rib spaces (38, 38₁ to 38₈), each space being delimited by two directly consecutive transverse ribs (36), said first and second side panels (34a, 34b) being provided with access openings (42₁ to 42₈) into the inside of the box,
**characterised in that** a single access opening (42₁ to 42₈) in the side panels (34a, 34b) is provided for each inter-rib space (38₁ to 38₈) belonging to a group (40) comprising at least three arbitrary and directly consecutive inter-rib spaces in the rigid structure, these access opening (42₁ to 42₈) being arranged alternately on said first and said second side panels (34a, 34b) of the rigid structure.

2. Rigid structure (8) according to claim 1, **characterised in that** said group (40) comprising at least three arbitrary and directly consecutive inter-rib spaces is composed of at least eight inter-rib spaces (38₁ to 38₈) .

3. Rigid structure (8) according to claim 1 or claim 2, **characterised in that** said group (40) comprising at least three arbitrary and directly consecutive inter-rib spaces includes at least 60% of all inter-rib spaces (38, 38₁ to 38₈) formed in the rigid structure.

4. Rigid structure (8) according to any one of the previous claims, **characterised in that** each access opening (42₁ to 42₈) is circular in shape and has a radius larger than 200 mm.

5. Rigid structure (8) according to any one of the previous claims, **characterised in that** it also comprises an upper spar (30) and a lower spar (32), and **in that** at least one of these two spars is provided with at least one access opening (44, 46) allowing access to the inside of the box.

6. Suspension pylon (4) for an aircraft engine (6) comprising a rigid structure (8) according to any one of the previous claims.

## Patentansprüche

1. Starre Struktur (8) eines Aufhängungssystems (4) für das Triebwerk (6) eines Luftfahrzeugs, wobei die starre Struktur die Form eines Kastens aufweist, der seitlich auf einer Seite durch eine erste Seitenplatte des Kastens (34a) und auf der anderen Seite durch eine zweite Seitenplatte des Kastens (34b) geschlossen ist, wobei die starre Struktur auch Querrippen (36), die die beiden Seitenplatten (34a, 34b) verbinden und in einer Längsrichtung (X) der starren Struktur voneinander beabstandet sind, sowie mehrere Zwischenrippenräume (38, 38₁ bis 38₈), die jeweils durch zwei direkt aufeinanderfolgende Querrippen (36) begrenzt sind, aufweist, wobei die erste und die zweite Seitenplatte (34a, 34b) mit Zugangsöffnungen (42₁ bis 42₈) ausgestattet sind, die einen Zugang in das Innere des Kastens gestatten,
**dadurch gekennzeichnet, dass** für jeden Zwischenrippenraum (38₁ bis 38₈), der zu einer Gruppe (40) gehört, die mindestens drei beliebige und direkt aufeinanderfolgende Zwischenrippenräume der starren Struktur umfasst, eine einzige Zugangsöffnung (42₁ bis 42₈) an den Seitenplatten (34a, 34b) angebracht ist, wobei diese Zugangsöffnungen (42₁ bis 42₈) abwechselnd an der ersten und der zweiten Seitenplatte (34a, 34b) der starren Struktur angeordnet sind.

2. Starre Struktur (8) nach Anspruch 1, **dadurch gekennzeichnet, dass** die Gruppe (40), die mindestens drei beliebige und direkt aufeinanderfolgende Zwischenrippenräume umfasst, aus mindestens acht Zwischenrippenräumen (38₁ bis 38₈) besteht.

3. Starre Struktur (8) nach Anspruch 1 oder Anspruch 2, **dadurch gekennzeichnet, dass** die Gruppe (40), die mindestens drei beliebige und direkt aufeinanderfolgende Zwischenrippenräume umfasst, mindestens 60 % der Gesamtmenge der in der starren Struktur ausgebildeten Zwischenrippenräume (38, 38₁ bis 38₈) einbezieht.

4. Starre Struktur (8) nach einem der vorhergehenden Ansprüche, **dadurch gekennzeichnet, dass** jede Zugangsöffnung (42₁ bis 42₈) eine kreisrunde Form aufweist und einen Radius von mehr als 200 mm aufweist.

5. Starre Struktur (8) nach einem der vorhergehenden Ansprüche, **dadurch gekennzeichnet, dass** sie auch einen oberen Längsträger (30) sowie einen unteren Längsträger (32) aufweist und dass mindestens einer von diesen beiden Letzteren mit mindestens einer Zugangsöffnung (44, 46) ausgestattet ist, die einen Zugang in das Innere des Kastens gestattet.

6. Aufhängungssystem (4) für ein Triebwerk (6) eines Luftfahrzeugs, das eine starre Struktur (8) nach einem der vorhergehenden Ansprüche aufweist.
